# EUROPEAN PATENT APPLICATION

(11) **EP 2 942 708 A1**
(43) Date of publication of application: **11.11.2015**
(21) Application number: 14179990.8
(22) Date of filing: 06.08.2014
(51) Int. Cl.: G06F 3/16, G10L 15/22, G06F 9/44

(54) **Data input system for macro activation**

(30) Priority: 07.05.2014 TW 103116213
(71) Applicant: Giga-Byte Technology Co., Ltd., New Taipei City 231 (TW)
(72) Inventor: Lin, Yin Yu, 231 New Taipei City (TW); Shih, Po-Jen, 231 New Taipei City (TW)
(74) Representative: Cabinet Chaillot

(57) **Abstract**

An input system of macro activation for rapidly activating a pre-recorded macro procedure includes a memory module, an input recognition module, a data processing unit, and a macro-processing unit. The memory module stores at least one recognition sample and a macro-activating command corresponding to the recognition sample. The input recognition module is used to read in a data to be recognized. The data processing unit receives the data to be recognized and determines whether the data to be recognized matches the recognition sample. If the data to be recognized matches the recognition sample, the data processing unit retrieves the macro-activating command from the memory module and issues the macro-activating command to the macro-processing unit, which is connected to the data processing unit. The macro-processing unit performs the pre-recorded macro procedure upon receiving the macro-activating command.

## Description

### BACKGROUND

### Technical Field

This disclosure relates to an input system of macro activation and, more particularly, to an input system of macro activation to rapidly activate macro functions while conserving the number of macro keys.

### Description of Related Art

The advent of the information age is making computers ubiquitous in our daily life. As computer technology advances, a computer input device, such as a keyboard or a mouse, which would only accept input of plain characters and numerical information, has been designed to be more human-centered to accept versatile inputs. These input devices, for example, has not only served as a user-interface for input, but also provided specific functions according to the user's requirements for computer games or word processing. In addition to standard keys for input, these input devices of current design may be equipped with macro keys or buttons for performing macro functions, a user-friendly design which makes the computer more enjoyable and convenient to use.

A macro, in general, is a batch command that performs a series of input sequences, such as keyboard keystrokes or mouse buttons, to simplify the user's input actions. The macro key, corresponding to a macro function, is designed to set up related settings for an application program configured to define and record special features of the keystrokes or buttons. Through some specific software, a sequence of keystrokes or buttons can be recorded as macro instructions, which combined correspond to a macro key. At a later time when the macro key is pressed, the corresponding macro will be executed; that is, the input actions associated with the macro will be played back as recorded.

However, an extra macro key on a keyboard contributes to increased hardware costs. In practice, a macro key usually corresponds to one macro function. Although each of the macro keys can be redefined and re-recorded, the number of the macro keys on the input devices has a limitation which is, for example, less than ten macro keys, and once designed, the number of the macro keys on the input device is not easily extended.

### SUMMARY

In view of the foregoing, this disclosure provides an input system of macro activation, which can, without the need of additional macro keys, rapidly activate macro functions and have the benefit of extending the number of macro functions.

To achieve the object, this disclosure provides an input system of macro activation for rapidly activating pre-recorded macro procedures. The input system includes a memory module, an input recognition module, a data processing unit, and a micro-processing unit. The memory module stores at least one recognition sample and a macro-activating command corresponding to said recognition sample, where the macro-activating command corresponds to the macro procedure. The input recognition module reads in a data to be recognized. The data processing unit receives the data to be recognized and determines whether the data to be recognized matches the recognition sample. If the data to be recognized matches the recognition sample, the data processing unit retrieves the macro-activating command from the memory module and outputs the macro-activating command. The macro-processing unit is connected to the data processing unit, wherein the macro-processing unit performs the corresponding macro procedure upon receiving the macro-activating command from the data processing unit.

In one embodiment, if the data to be recognized does not match the recognition sample, the data processing unit issues a warning of recognition mismatch.

In one embodiment, the input system of macro activation further includes an activation key, which is used to issue an enabling command to enable the input recognition module.

In one embodiment, when the activation key is pressed, the input recognition module is enabled, while the activation is not pressed, the input recognition module is not enabled.

In one embodiment, the input recognition module is a voice recognition module, where the recognition sample and the data to be recognized are a voice content.

In one embodiment, the voice recognition module includes a microphone and a voice recognition core, where the microphone is used to receive the voice content, and the voice recognition core is used to encode the voice content into an encoded data.

In one embodiment, the input recognition is a fingerprint recognition module, where the recognition sample and the data to be recognized are a fingerprint.

In one embodiment, the fingerprint recognition module includes a fingerprint recognition processor and a fingerprint scanner, where the fingerprint scanner is used to scan the fingerprint, and the fingerprint recognition processor is used to encode the fingerprint into an encoded data.

In one embodiment, if the similarity ratio between the data to be recognized and the recognition sample is higher than a threshold, the data processing unit determines that the data to be recognized and the recognition sample are matched.

In sum, the input system of macro activation of this disclosure not only rapidly activates the macro functions without the need of additional macro keys, but also extends the number of macros allowed in this system.

### BRIEF DESCRIPTION OF THE DRAWINGS

The structure as well as a preferred mode of use, further objects, and advantages of this disclosure will be best understood by referring to the following detailed description of some illustrative embodiments in conjunction with the accompanying drawings, in which:
FIG. 1 is a block diagram of the input system of macro activation of this disclosure;
FIG. 2 is a schematic drawing showing a storage block of the memory module of the input system as in FIG. 1;
FIG. 3 is a block diagram of the input system according to an embodiment of this disclosure as in FIG. 1;
FIG. 4 is a block diagram of the input system according to an embodiment of this disclosure as in FIG. 1;
FIG. 5 is a block diagram of the input system according to the first embodiment of this disclosure;
FIG. 6 is a block diagram of the input system according to the second embodiment of this disclosure; and
FIG. 7 is a block diagram of the input system according to the third embodiment of this disclosure.

### DETAILED DESCRIPTION OF THE PREFERRED EMBODIMENTS

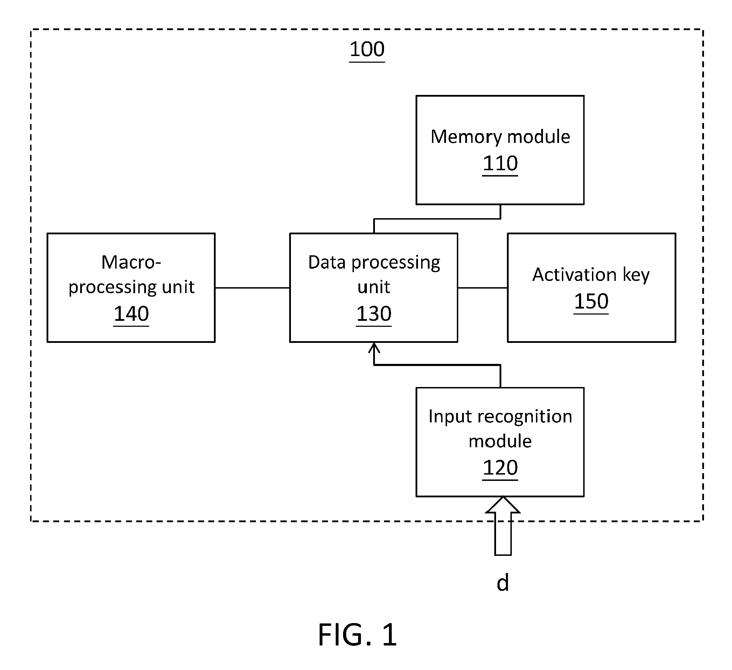

Referring to FIG. 1, the input system of macro activation 100 is used to activate pre-recorded macro procedure A, B, or C, where each of the macro procedures is a set of operational commands automatically executed in sequence under a certain operating procedure.

As shown in FIG. 1, the input system of macro activation 100 includes a memory module 110, an input recognition module 120, a data processing unit 130, and a macro-processing unit 140. Each of the modules or units of the input system 100 may be a separated hardware module, a functional module on which a specific procedure is performed by the computer system, or any combination of the two thereof.

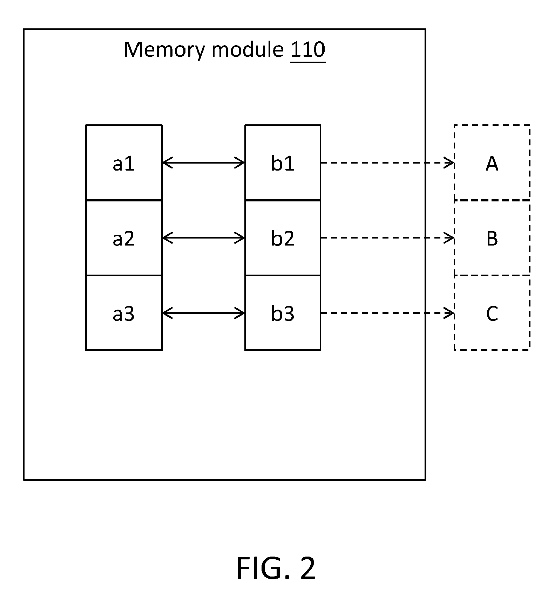

Referring to FIGS. 1 and 2, the memory module 110 is used to store at least one recognition sample which is, as shown in FIG. 2, a1, a2, or a3, and at least one macro-activating command, which is, as shown in FIG. 2, b1, b2, or b3, corresponding to the recognition sample. The macro-activating commands b1, b2, and b3, correspond to the macro procedures A, B, and C, respectively.

Referring to FIGS. 1 and 2, the input recognition module 120 is used to read a data d to be recognized. The data processing unit 130 electrically connects to the input recognition module 120 and receives the data d. Upon receiving the data d, the data processing unit 130 determines if the data d matches any of the recognition samples a1, a2, and a3.

As shown in FIGS. 1 and 2, if the data d to be recognized matches any of the recognition samples a1, a2, and a3, the data processing unit 130 retrieves the macro-activating commands b1, b2, and b3 that correspond to the recognition samples from the memory module 110, and outputs the macro-activating commands b1, b2, and b3 to the macro-processing unit 140. If none of the recognition samples matches the data d to be recognized, the data processing unit 130 takes no operation, or issues a warning of recognition mismatch to a display unit (not shown).

As shown in FIG. 1, the macro-processing unit 140 electrically connects to the data processing unit 130. Upon receiving the macro-activating commands b1, b2, and b3 from the data processing unit 130, the macro-processing unit 140 performs the corresponding macro procedure A, B, or C.

To avoid constant recognition operations triggered by surrounding noise that the data processing unit 130 tends to issue a warning of recognition mismatch, the input system of macro activation 100 may be further provided with an activation key 150.

The activation key 150 is configured, while pressed, to issue an enabling command to enable the input recognition module 120. The activation key 150 may be a single key or a combination of special hot keys. For example, the activation key 150 may be an independent switch structurally disposed on, and connected to, the input recognition module 120, or a function button disposed on a mouse; the activation key 150 may be a combination of hot keys, or a function key, on the keyboard.

In one embodiment, when the activation key 150 is pressed, the input recognition module 120 is enabled, while the activation key 150 is not pressed (i.e., the user releases the activation key 150), the input recognition module 120 is not enabled. In another embodiment, once the activation key 150 is pressed, the input recognition module 120 is enabled for a predetermined time period (e.g., 5 or 10 sec), and the input recognition module 120 is not enabled after the time period has elapsed.

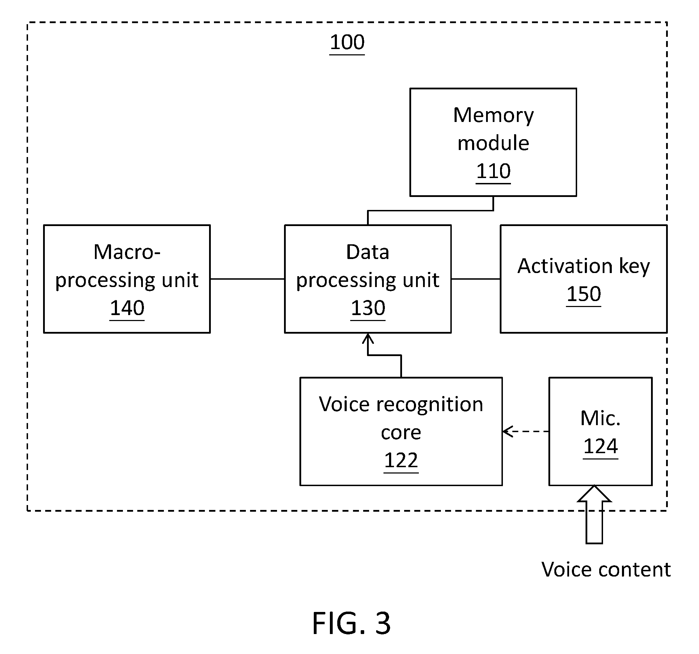

Referring to FIG. 3, the input recognition module 120 according to an embodiment is a voice recognition module for receiving and recognizing voice content. The voice recognition module includes a voice recognition core 122 and a microphone 124. The microphone 124 is used to receive the voice content, which then is transmitted to the voice recognition core 122 for encoding. After encoding, the voice recognition core 122 transmits the encoded data to the data processing unit 130. In this embodiment, the recognition samples a1, a2, and a3 and the data d to be recognized are respectively voice content. By speaking into the microphone 124, a user dictates the macro procedure A, B, or C to be executed, where the macro procedure A, B, or C correspond to one of the pre-recorded recognition samples a1, a2, and a3. The dictated voice content as the data d to be recognized is then transmitted to the voice recognition core 122. The voice recognition core 122 compares the data d with the recognition samples a1, a2, and a3, which are pre-recorded voice content. If the similarity ratio between the recognition samples a1, a2, and a3 and the data d to be recognized is higher than a threshold, the data processing unit 130 determines that the data d to be recognized and any one of the recognition samples a1, a2, and a3 are matched. The voice recognition module is only enabled when the activation key 150 is pressed, and therefore constant recognition operations, performed by the voice recognition core 122 and the data processing unit 130, due to mistakenly triggering of the microphone 124 by surrounding noise, can be avoided. By avoiding unnecessary operations, the system resources are conserved accordingly.

In FIG. 3, the voice recognition core 122 and the data processing unit 130 are two separated functional modules. In practice, the voice recognition core 122 and the data processing unit 130 can be integrated into one single component, where the operations of the component are accomplished by software execution or through hardware design. Besides, the voice recognition core 122 and the data processing unit 130 can be separated and disposed on two different devices.

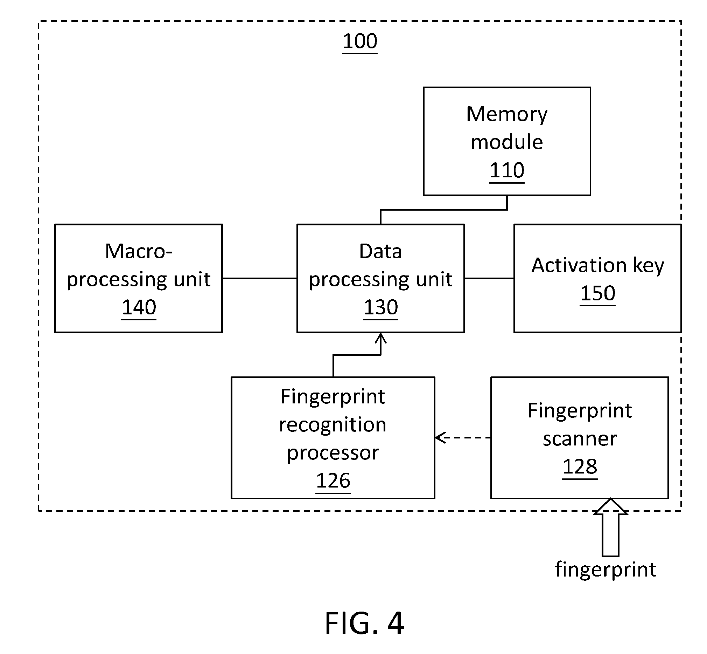

Referring to FIG. 4, the input recognition module 120 according to another embodiment is a fingerprint recognition module for receiving and recognizing a fingerprint. The fingerprint recognition module includes a fingerprint recognition processor 126 and a fingerprint scanner 128. The fingerprint scanner 128 is used to scan the fingerprint, which then is transmitted to the fingerprint recognition processor 126 for encoding. After encoding, the fingerprint recognition processor 126 transmits the encoded data to the data processing unit 130. In this embodiment, the recognition samples a1, a2, and a3 and the data d to be recognized are respectively a fingerprint. By providing the fingerprint of a specific finger, a user activates the corresponding macro procedure A, B, or C to be executed. The user recorded the fingerprints of different fingers which are, for example, corresponding to the different macro procedures A, B, and C. The fingerprint is then transmitted to the fingerprint recognition processor 126 for encoding. The encoded data is further transmitted to the data processing unit 130. In this embodiment, the recognition samples a1, a2, and a3 may be pre-recorded fingerprints or characteristics of fingerprints. If the data processing unit 130 determines that the similarity ratio between the recognition samples a1, a2, and a3 and the data d to be recognized is higher than a threshold, the data processing unit 130 confirms that the data d to be recognized and any one of the recognition samples a1, a2, and a3 are matched. The fingerprint scanner 128 may be a fingerprint scanning device of capacitive or optical type. The fingerprint scanner 128 is enabled only when the activation key 150 is pressed, avoiding unnecessary fingerprint recognition operations, and therefore the system resources are conserved.

In FIG. 4, the fingerprint recognition processor 126 and the data processing unit 130 are two separated functional modules. In practice, the fingerprint recognition processor 126 and the data processing unit 130 can be integrated into one single component, where the operations of the component are accomplished by software execution or through hardware design. Besides, the fingerprint recognition processor 126 and the data processing unit 130 can be separated and disposed on two different devices.

More embodiments, specifically applied in a computer device and peripherals thereof, of the input system 100 that illustrate how modules and units are configured to operate are described as follows.

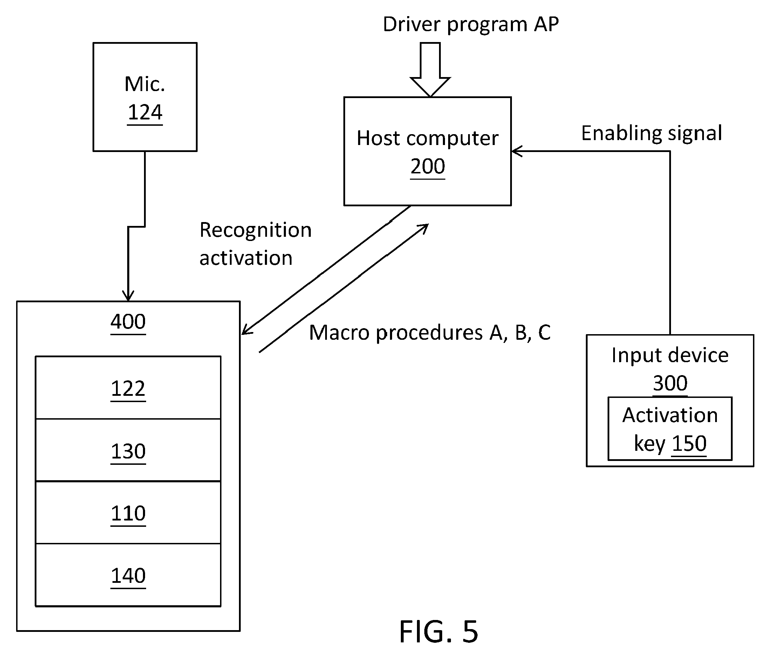

Referring to FIG. 5, the input system of macro activation 100 according to the first embodiment of this disclosure includes a host computer 200, an input device 300, a microphone 124, and a voice recognition device 400.

The input device 300 is a mouse, or a keyboard, communicating with the host computer 200 through wires or wirelessly. The input device 300 is provided with at least one key, or a combination of hot keys, serving as the activation key 150. The host computer 200 is operative to run a driver program for setting up the key, or the combination of hot keys, as the activation key 150.

When the key, or the combination of hot keys, which serves as the activation key 150, is pressed, the host computer 200, running a driver program, issues an enabling signal to the voice recognition device 400 so as to enable the voice recognition device 400.

Referring to FIG. 5 with reference to FIG. 3, the voice recognition device 400 includes the voice recognition core 122, the data processing unit 130, the memory module 110 and the macro-processing unit 140. The communication protocol between the voice recognition device 400 and the host computer 200 may include a keyboard or mouse communication protocol such that the voice recognition device 400 is functioned as a keyboard or mouse of the host computer 200 in terms of hardware management.

After the voice recognition device 400 receives the enabling signal, the voice recognition core 122 of the voice recognition device 400 encodes the voice content received by the microphone 124 and sends the encoded data to the data processing unit 130 for recognition. If the encoded data matches the recognition samples that correspond to the macro procedures A, B, and C, the macro-processing unit 140 issues the commands corresponding to the macro procedures A, B, and C so as to drive the host computer 200 to perform the instructions defined in the macro procedures A, B, and C.

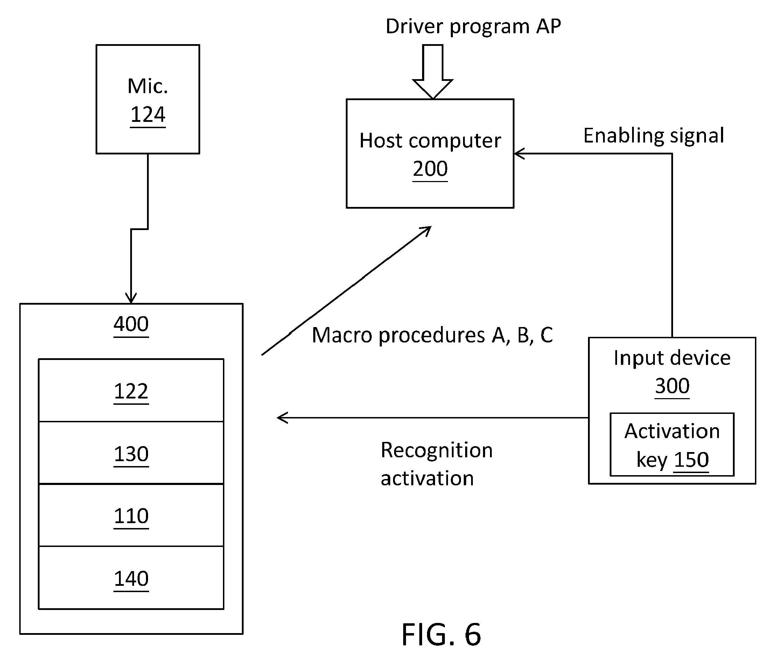

Referring to FIG. 6, the input system of macro activation 100 according to the second embodiment of this disclosure includes a host computer 200, an input device 300, a microphone 124, and a voice recognition device 400.

The input device 300 is a mouse, or a keyboard, communicating with the host computer 200 through wires or wirelessly. The input device 300 is provided with at least one key, or a combination of hot keys, serving as the activation key 150.

When the key, or the combination of hot keys, which serves as the activation key 150, is pressed, the input device 300 sends an enabling signal to the voice recognition device 400 via a wireless interface so as to enable the voice recognition device 400.

Referring to FIG. 6 with reference to FIG. 3, the voice recognition device 400 includes the voice recognition core 122, the data processing unit 130, the memory module 110 and the macro-processing unit 140. The communication protocol between the voice recognition device 400 and the host computer 200 may include a keyboard or mouse communication protocol such that the voice recognition device 400 is functioned as a keyboard or mouse of the host computer 200 in terms of hardware management.

After the voice recognition device 400 receives the enabling signal, the voice recognition core 122 of the voice recognition device 400 encodes the voice content received by the microphone 124 and sends the encoded data to the data processing unit 130 for recognition. If the encoded voice content matches the recognition samples that correspond to the macro procedures A, B, and C, the macro-processing unit 140 issues the commands corresponding to the macro procedures A, B, and C so as to drive the host computer 200 to perform the instructions defined in the macro procedures A, B, and C.

In this embodiment, the host computer 200 does not require a special driver program for setting up the activation key 150, but a universal driver program of a keyboard or mouse for connecting to the input device 300 is sufficient, with the requirement that the input device 300 can communicate with the voice recognition device 400 through wireless communication protocol.

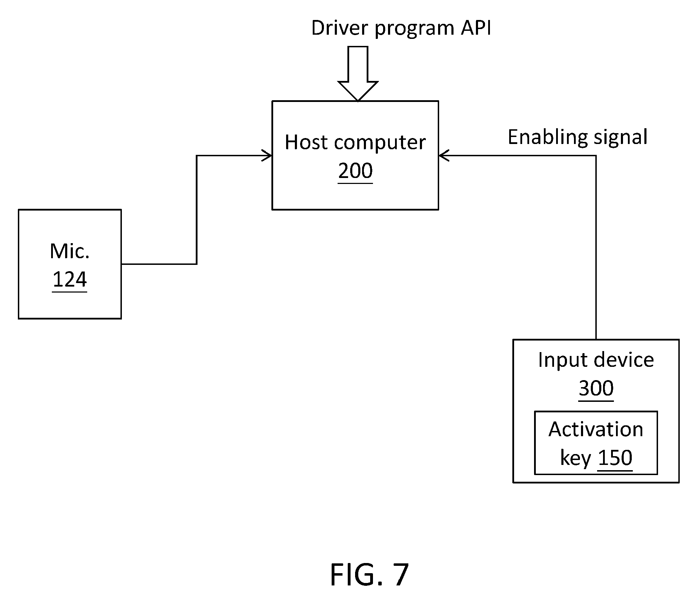

Referring to FIG. 7, the input system 100 of macro activation according to the third embodiment of this disclosure includes a host computer 200, an input device 300, and a microphone 124.

The input device 300 is a mouse, or a keyboard, communicating with the host computer 200 through wires or wirelessly. The input device 300 is provided with at least one key, or a combination of hot keys, serving as the activation key 150. The host computer 200 is operative to run a recognition program API for setting up the key, or the combination of hot keys, as the activation key 150, and to perform the operations of the voice recognition core 122, the data processing unit 130, the memory module 110, and the macro-processing unit 140.

When the key, or the combination of hot keys, which serves as the activation key 150, is pressed, the host computer 200 performs voice recognition.

Referring to FIG. 7 with reference to FIG. 3, the host computer 200 encodes the voice content received by the microphone 124 and performs voice recognition. If the encoded data matches one of the recognition samples, the host computer 200 performs the instructions defined in the macro procedures A, B, or C.

Therefore, through fingerprint or voice recognition, the input system of macro activation of this disclosure is able to rapidly active macro functions while conserving the number of macro keys.

## Claims

1. An input system of macro activation for rapidly activating a pre-recorded macro procedure, comprising:
a memory module, for storing at least one recognition sample and a macro-activating command corresponding to said recognition sample, said macro-activating command corresponding to said macro procedure;
an input recognition module, for reading in a data to be recognized;
a data processing unit, receiving said data to be recognized and checking if said data to be recognized matches said recognition sample, wherein if said data to be recognized matches said recognition sample, said data processing unit retrieves said macro-activating command from said memory module and outputs said macro-activating command; and
a macro-processing unit, connected to said data processing unit, said macro-processing unit executing the corresponding macro procedure when receiving said macro-activating command from said data processing unit.

2. The input system of macro activation as claimed in Claim 1, wherein when said data to be recognized does not match said recognition sample, said data processing unit issues a warning of recognition mismatch.

3. The input system of macro activation as claimed in Claim 1, further comprising:
an activation key, serving to issue an enabling command to enable said input recognition module.

4. The input system of macro activation as claimed in Claim 3, wherein while said activation key is pressed, said input recognition module is enabled, and while said activation is not pressed, said input recognition module is not enabled.

5. The input system of macro activation as claimed in Claim 1, wherein said input recognition module is a voice recognition module, and said recognition sample and said data to be recognized are a voice content.

6. The input system of macro activation as claimed in Claim 5, wherein said said voice recognition module includes a microphone and a voice recognition core, and wherein said microphone is used to receive said voice content, and said voice recognition core is used to encode said voice content into an encoded data.

7. The input system of macro activation as claimed in Claim 1, wherein said input recognition module is a fingerprint recognition module, and said recognition sample and said data to be recognized are a fingerprint.

8. The input system of macro activation as claimed in Claim 7, wherein said fingerprint recognition module includes a fingerprint recognition processor and a fingerprint scanner, said fingerprint scanner is used to scan said fingerprint, and said fingerprint recognition processor is used to encode the scanned fingerprint into an encoded data.

9. The input system of macro activation as claimed in Claim 1, wherein if the similarity ratio between said data to be recognized and said recognition sample is higher than a predetermined threshold, said data processing unit determines that said data to be recognized and said recognition sample are matched.
